# FASCICULE DE BREVET EUROPEEN

(11) **EP 4 334 809 B1**
(45) Date de publication et mention de la délivrance du brevet: **23.07.2025**
(21) Numéro de dépôt: 22714467.2
(22) Date de dépôt: 08.04.2022
(51) Int. Cl.: G06F 3/041, G06F 3/042, G06F 3/043, G06F 3/0488, G06F 3/04886, G06F 1/16

(54) **KIT DE DETECTION POUR BORNE INTERACTIVE**
DETEKTIONSKIT FÜR INTERAKTIVES ENDGERÄT
DETECTION KIT FOR INTERACTIVE TERMINAL

(30) Priorité: 04.05.2021 FR 2104711
(43) Date de publication de la demande: 13.03.2024
(73) Titulaire: Imprimerie Nationale, 75116 Paris (FR)
(72) Inventeur: JANER, Pascal, 78140 VELIZY-VILLACOUBLAY (FR); MALBOROUGT, Jean-Noël, 78140 VELIZY-VILLACOUBLAY (FR)
(74) Mandataire: Brun, Philippe Alexandre Georges
(86) Numéro de dépôt international: PCT/EP2022/059495
(87) Numéro de publication internationale: WO 2022/233540

(56) Documents cités:
- WO-A1-2021/231281
- CN-A- 109 189 275
- CN-A- 111 104 009
- JP-A- 2011 113 489
- US-A1- 2012 280 926
- US-A1- 2020 319 750
- US-B1- 10 275 098

## Description

### Domaine technique

La présente invention concerne un kit de détection pour une borne interactive, une borne interactive équipée d'un kit de détection et un procédé de modification d'une borne interactive.

### Technique antérieure

Il est connu d'utiliser des bornes interactives proposant à des utilisateurs de réaliser des opérations en libre-service, telles qu'un distributeur de billet, un borne de recharge de titre de transport, un bouton de demande d'arrêt dans les transports, une borne d'identification au frontière, etc. Ces bornes interactives comprennent généralement un bâti fixé au sol, un écran tactile logé dans le bâti, une unité centrale, différent périphériques (imprimante, lecteur de carte, etc, ...). L'utilisateur interagit avec l'écran tactile par une série de pressions réalisées avec ses doigts. Ces écrans tactiles pouvant être utilisés par un grand nombre de personnes, ils sont une source de propagation de virus, tel que le virus de la Covid 19.

Il existe donc un besoin de proposer une solution permettant de répondre aux enjeux d'une crise sanitaire tout en permettant de continuer à exploiter les bornes interactives actuelles en toute confiance. Le document CN 111104009 A divulgue une borne interactive pour limiter la propagation de maladies infectieuses. Le document US 2020/0319750 A1 divulgue un dispositif d'entrée permettant une interaction sans contact avec un objet affiché sur un écran.

### Exposé de l'invention

La présente invention vise à remédier au moins en partie à ce besoin.

Plus particulièrement, la présente invention a pour objectif de transformer les bornes interactives actuelles à écran tactile en bornes interactives pour lesquelles les contacts physiques avec les utilisateurs sont limités.

Pour cela un premier objet de l'invention concerne un kit de détection destiné à limiter des contacts physiques entre un utilisateur et un écran tactile d'une borne interactive. Le kit de détection comprend un cadre de détection sans contact apte à être positionné autour de l'écran tactile. Le kit de détection comprend également un module d'alimentation électrique apte à alimenter le cadre de détection à partir de la borne interactive. Le kit de détection comprend également un module de transmission de données apte à permettre un échange de données entre ce cadre de détection et la borne interactive.

Le kit permet ainsi de transformer de manière simple et pratique la borne interactive à écran tactile en borne interactive aux contacts physiques limités. Le cadre de détection vient chevaucher l'écran tactile sans le cacher. Ainsi, des informations utiles peuvent être toujours accessibles à la lecture sur l'écran tactile à destination de l'utilisateur. Pour faire sa sélection, l'utilisateur va approcher ses doigts de l'écran tactile à l'intérieur du cadre de détection. Ce cadre détecte alors la position des doigts par rapport à l'écran tactile et aux informations présentes sur cet écran. Le cadre va ainsi déduire l'intention de l'utilisateur en matière de commande sans que l'utilisateur n'ait besoin de toucher directement l'écran tactile.

Dans un mode de réalisation particulier, le cadre de détection comprend des moyens d'adaptation de la taille de l'écran de détection à l'écran tactile.

Ainsi, le cadre de détection s'adapte à différentes dimensions de l'écran tactile. Ceci facilite la transformation de bornes interactives présentant des tailles d'écran différentes à partir d'un même kit de détection. Ces moyens d'adaptation peuvent se présenter sous la forme d'une première partie de cadre glissant sur une seconde partie centrale de ce cadre. Ces moyens d'adaptation permettent d'ajuster la longueur et/ou la largeur du cadre de détection. Les moyens d'adaptation peuvent comprendre également des éléments de blocage, tels que des picots, pour l'immobilisation entre elles des parties de cadre et la stabilisation de ce cadre dans des dimensions adaptées.

Dans un mode de réalisation particulier, le cadre de détection comprend des moyens de fixation dudit cadre sur la borne interactive.

On s'assure ainsi que le cadre de détection est bien installé durablement sur la borne interactive. Ces moyens de fixation sont, par exemple, des moyens de collage tels qu'une colle époxy ou des bandes adhésives. En variante, les moyens de fixations sont des moyens de vissage tels que des rivets.

Dans un mode de réalisation particulier, le cadre de détection comprend au moins deux capteurs, chaque capteur étant apte à détecter des mouvements de l'utilisateur au niveau d'un plan virtuel associé.

Dans un mode de réalisation particulier, les plans virtuels associés aux capteurs sont distants entre eux et parallèles à l'écran tactile.

Dans mode de réalisation particulier, les deux capteurs sont sélectionnés parmi une liste de capteurs comprenant au moins :
- un capteur infrarouge ;
- un capteur à ultrasons ;
- une caméra de profondeur.

Dans un mode de réalisation particulier, le kit de détection comprend une pluralité de diodes électroluminescentes s'étendant sur le cadre de détection, lesdites diodes électroluminescentes étant adaptées pour être activées en fonction des interactions de l'utilisateur avec au moins un desdits plans virtuels.

Dans un mode de réalisation particulier, le kit de détection comprend un dispositif de projection d'un clavier numérique holographique.

Dans un mode de réalisation particulier, le kit de détection comprend un dispositif de projection holographique apte à remplacer l'écran tactile.

Un autre objet de l'invention concerne une borne interactive destinée à être utilisée par un utilisateur, cette borne interactive comprenant un kit de détection selon l'objet précédent.

Un autre objet de l'invention concerne un procédé de transformation d'une borne interactive pour limiter des contacts entre un utilisateur et un écran tactile de ladite borne interactive, ledit procédé comprenant :
- une étape d'installation d'un kit de détection selon un des objets précédents ;
- une étape de calibrage de capteurs dudit kit de détection.

La présente invention sera mieux comprise à la lecture de la description détaillée de modes de réalisation pris à titre d'exemples nullement limitatifs et illustrés par les dessins annexés sur lesquels :
- la figure 1 illustre, vue de face, une borne interactive comportant un kit de détection selon l'invention ;
- la figure 2 illustre la borne interactive de la figure 1, vue de côté ;
- la figure 3 est un agrandissement du cadre de détection du kit de détection selon l'invention positionné autour d'un écran tactile de la borne interactive des figures 1 et 2 ;
- la figure 4 illustre, selon une vue en coupe en perspective, une partie du cadre de détection de la figure 3 ;
- la figure 5 illustre, selon une vue en perspective, un dispositif de projection d'un clavier numérique holographique appartenant au kit de détection de l'invention ;
- la figure 6 illustre le dispositif de projection de la figure 4, selon une coupe A-A ;
- la figure 7 illustre le fonctionnement d'une architecture logicielle d'une borne interactive selon l'art antérieur ;
- la figure 8 illustre le fonctionnement d'une architecture logicielle d'une borne interactive comprenant le kit de détection de l'invention ;
- la figure 9 illustre les différentes étapes d'un procédé de transformation pour obtenir la borne interactive des figures 1 et 2 modifiée par le kit de détection.

L'invention n'est pas limitée aux modes de réalisation et variantes présentées et d'autres modes de réalisation et variantes apparaîtront clairement à l'homme du métier.

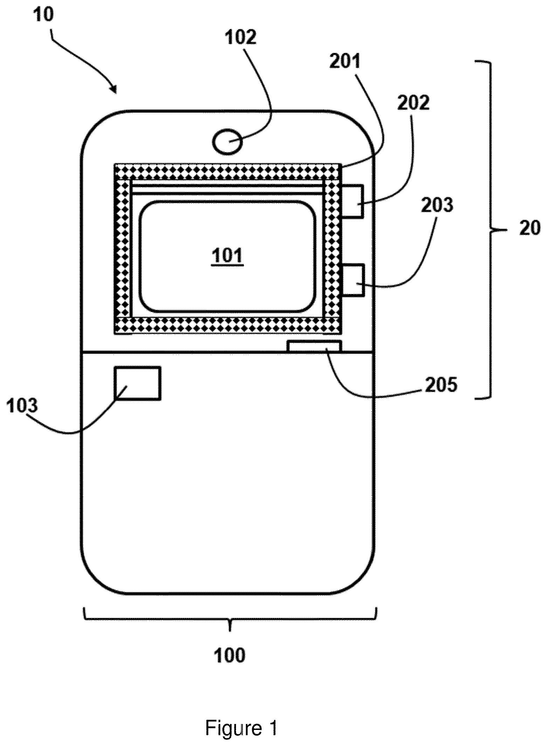

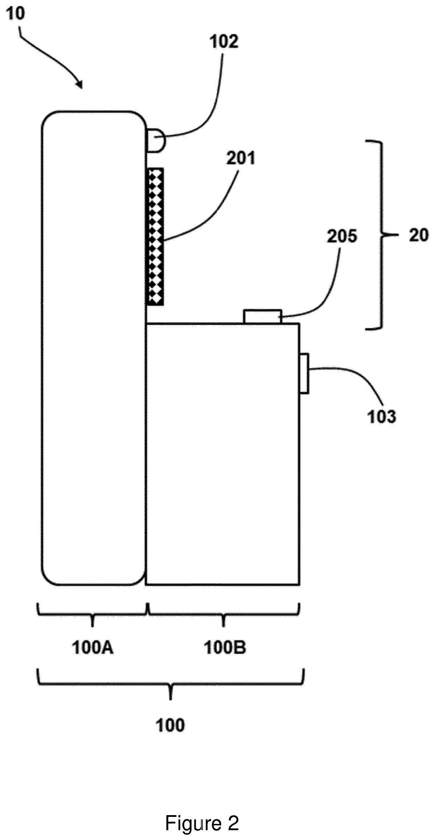

La figure 1 et la figure 2 illustrent une borne interactive 10 comportant un kit de détection 20 selon l'invention.

La borne interactive 10 comprend :
- un châssis 100 ;
- un écran tactile 101.

A titre d'exemple non limitatif, la borne interactive 10 comprend également dans le mode de réalisation de la figure 1 :
- une caméra 102 ;
- un capteur d'empreinte sans contact 103.

Le châssis 100 est adapté pour faire reposer la borne interactive 10 sur un sol et/ou contre un mur. Ce châssis est constitué ici de deux parties 100A, 100B.

Une première partie 100A de châssis a une forme parallélépipédique allongée dans le sens de la hauteur. Cette hauteur correspond sensiblement à la taille maximale d'un utilisateur moyen. Cette première partie 100A est adaptée pour loger l'écran tactile 101 et la caméra 102.

Une seconde partie 100B de châssis présente également une forme parallélépipédique. Cette seconde partie 100B est positionnée devant la première partie 100A. Elle présente une hauteur plus faible que la première partie 100A. La hauteur de la seconde partie 100B est ici sensiblement égale à la moitié de la hauteur de la première partie 100A. Cette seconde partie 100B est adaptée pour loger le capteur d'empreinte sans contact 103.

L'écran tactile 101 constitue une interface avec l'utilisateur. Cet écran 101 est ainsi adapté pour afficher des informations. A titre d'exemple, l'écran tactile 101 est un écran de 17 pouces de type « Elo Open Frame » de la société Elo Touch Solutions. L'utilisateur peut sélectionner avec ses doigts les options de services désirées par un contact physique direct avec l'écran 101.

La caméra 102 est adaptée pour enregistrer des séquences vidéo et/ou des photos de l'utilisateur. L'utilisation de la caméra 102 est par exemple appropriée au traitement d'une demande de renouvellement d'une carte d'identité. La caméra 102 est positionnée au-dessus de l'écran tactile 101. Plus particulièrement, la caméra 102 est logée dans une zone supérieure de la première partie 100A du châssis 100 à une hauteur lui permettant d'enregistrer le visage d'un utilisateur moyen.

Le capteur d'empreinte sans contact 103 est adapté pour lire les empreintes de l'utilisateur sans que celui-ci n'ait besoin d'un contact physique par sa main. L'utilisation d'un tel capteur d'empreinte 103 est par exemple appropriée au traitement d'une demande de renouvellement d'une carte d'identité. Le capteur d'empreinte 103 est logé dans la seconde partie 100B du châssis 100 à une hauteur lui permettant de recevoir la main de l'utilisateur.

Le kit de détection 20 comprend :
- un cadre de détection sans contact 201 ;
- un module d'alimentation électrique 202 ;
- un module de transmission de données 203 ;
- un module logiciel 204 ;
- un dispositif de projection 205 d'un clavier numérique holographique.

Le cadre de détection sans contact 201 permet à un utilisateur d'interagir avec la borne interactive 10 en limitant au maximum, voire en supprimant totalement, le besoin de contacts physiques avec l'écran tactile 101. En pratique, le cadre de détection sans contact 201 détecte les mouvements du doigt de l'utilisateur à quelques centimètres de l'écran tactile 101. Les mouvements de l'utilisateur servent à simuler le déplacement d'une « souris » virtuelle dont les informations sont transmises au système hôte via une interface USB HID pour « USB Human Interface Device » de type « Absolute Mouse ». Le cadre de détection 201 est adapté pour être positionné autour de l'écran tactile 101. La température de fonctionnement de l'écran tactile 101 est ici compris entre -20°C et +60°C. Préférentiellement, l'écran tactile 101 est conforme aux normes de protection IP54 et IK07.

Le module d'alimentation électrique 202 est adapté pour alimenter le cadre de détection sans contact 201 à partir d'une alimentation (non représentée sur les figures 1 et 2) de la borne interactive 10. Le module 202 est, par exemple, apte à alimenter le cadre de détection 201 en 12V ou en 24V avec un courant continu. Préférentiellement, la puissance consommée du cadre de détection sans contact 201 est inférieure à 10W. Le raccordement électrique entre le module d'alimentation électrique 202 et l'alimentation de la borne interactive 10 se fait à l'aide de fils nus. En variante, le raccordement électrique se fait à l'aide d'un connecteur adapté.

Le module de transmission de données 203 est adapté pour permettre un échange de données entre le cadre de détection sans contact 201 et la borne interactive 10. Ce module comprend la connectique adaptée pour un tel échange de données.

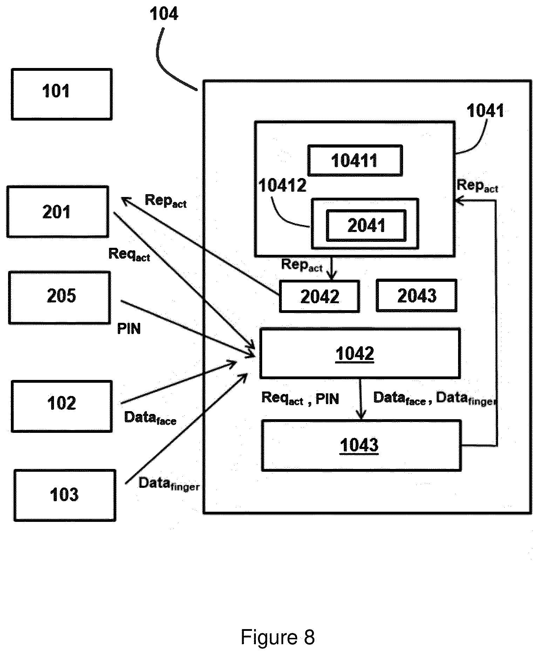

Le module logiciel 204 comprend un ensemble de blocs permettant de réaliser l'interface logicielle entre un système d'exploitation existant de la borne interactive 10 et des éléments du kit 20 tels que le cadre de détection sans contact 201 et/ou le dispositif de projection 205 d'un clavier numérique holographique. Un tel module logiciel 204 est décrit plus en détail à la figure 8.

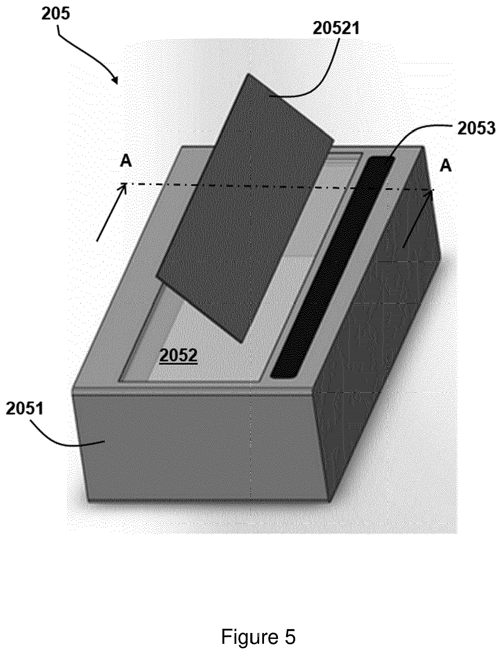

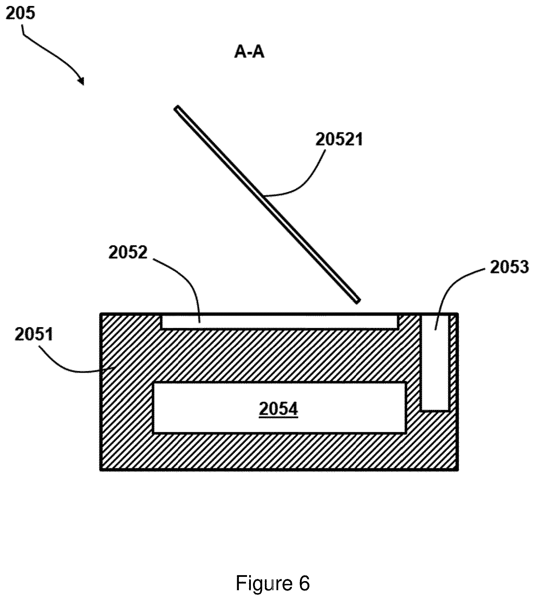

Le dispositif de projection 205 d'un clavier numérique holographique est un système de clavier numérique virtuel équipé d'une interface sans contact. Ce dispositif permet la saisie d'un certain nombre de chiffres de manière confidentielle. Il permet également de réaliser des fonctions standard de type « correction », « effacer » et « valider ». Le dispositif de projection 205 est compatible avec n'importe quel système supportant le protocole USB. Il est alimenté directement par la borne interactive 10 via une sortie USB filaire et il doit pouvoir s'allumer et s'éteindre sur demande. Les interactions de l'utilisateur avec le dispositif de projection 205 sont reportées via une interface USB HID agissant comme un pavé numérique. Un tel dispositif de projection 205 est décrit plus en détail aux figures 5 et 6.

Dans un mode de réalisation non représenté, le kit de détection comprend, en outre, un dispositif de projection holographique supplémentaire. Ce dispositif de projection est implanté dans le cadre de détection sans contact 201 et il est apte à remplacer l'écran tactile 101.

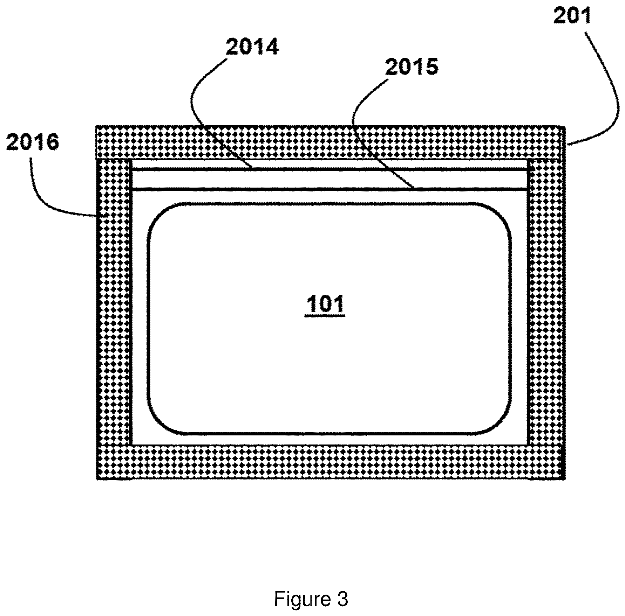

La figure 3 est un agrandissement de la borne interactive 10 au niveau de l'écran tactile 101. Sur cette figure 3, le cadre de détection sans contact 201 est détaillé. Ainsi ce cadre de détection 201 comprend :
- un premier capteur 2014 ;
- un second capteur 2015 ;
- une pluralité de diodes électroluminescentes 2016.

Le premier capteur 2014 est adapté pour détecter des mouvements de l'utilisateur au niveau d'un premier plan virtuel. Le second capteur 2015 est adapté pour détecter des mouvements de l'utilisateur au niveau d'un second plan virtuel. Le premier plan virtuel et le second plan virtuel sont distants entre eux et parallèle à l'écran tactile 101. Par exemple, le premier plan virtuel est le plus proche de l'écran tactile et il simule le « clic/sélection ». Préférentiellement, ce premier plan virtuel est distant d'environ 2 cm avec l'écran tactile 101. Le second plan virtuel est le plus éloigné de l'écran tactile et il simule un déplacement de la « souris ». Préférentiellement, le second plan virtuel est distant d'environ 4 cm avec l'écran tactile 101. Le premier capteur 2014 et le second capteur 2015 sont sélectionnés parmi une liste de capteurs comprenant au moins :
- un capteur infrarouge ;
- un capteur à ultrasons ;
- une caméra de profondeur.

Le premier capteur 2014 et le second capteur 2015 sont des capteurs de même type dans cette liste de capteurs. En variante, le premier capteur 2014 et le second capteur 2015 sont de types différents.

Les informations fournies par le premier capteur 2014 et le second capteur 2015 sont transmises à la borne interactive 10 par le module de transmission de données 203.

Le cadre de détection sans contact 201 comprend également une pluralité de diodes électroluminescentes 2016. Ces diodes électroluminescentes 2016 sont régulièrement réparties sur le cadre 201. Ces diodes génèrent différentes ambiances lumineuses en fonction des interactions de l'utilisateur avec le cadre 201. Par exemple, lorsque l'utilisateur interagit avec le second plan virtuel, les diodes électroluminescentes deviennent vertes. L'intensité lumineuse des diodes est fonction de la position du doigt de l'utilisateur. Lorsque l'utilisateur interagit avec le premier plan virtuel et qu'un clic est détecté, les diodes électroluminescentes émettent un flash vert. Lorsqu'aucune interaction n'est détectée, les diodes électroluminescentes présentent une couleur verte de faible intensité. En variante, les diodes électroluminescentes sont oranges lorsqu'aucune interaction n'est détectée.

Les diodes électroluminescentes 2016 sont reliées au module de transmission de données 203, par exemple, via une connexion USB.

On notera que sur l'exemple des figures 1 à 3, le cadre de détection sans contact 201 encadre totalement l'écran tactile 101. En variante, le cadre de détection peut n'encadrer que partiellement cet écran tactile 101. Par exemple, le cadre de détection peut comprendre uniquement deux montants. Ces montants sont parallèles entre eux et s'étendent de manière verticale ou horizontale de part et d'autre de l'écran tactile 101.

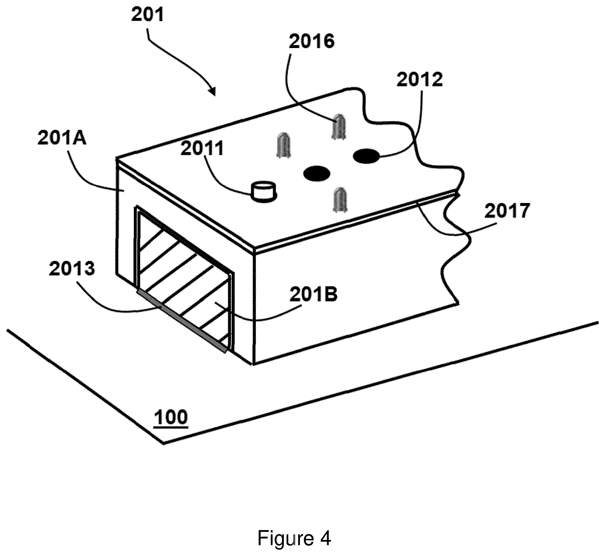

La figure 4 est une vue en coupe en perspective d'une partie du cadre de détection sans contact 201 de la figure 3. Sur cette figure 4, il est détaillé des moyens d'adaptation de la taille du cadre de détection 201. Ces moyens d'adaptation comprennent :
- une glissière 201A ;
- une âme 201B ;
- des éléments de blocage 2011, 2012.

La glissière 201A et l'âme 201A appartiennent au cadre de détection 201. La glissière est adaptée pour glisser sur l'âme 201B afin d'ajuster en largeur ou en longueur les dimensions de ce cadre 201. La glissière 201A présente ici une section en forme de U. L'âme 201B est représentée comme une partie pleine. Un léger jeu existe entre la glissière 201A et l'âme 201B en vue de faciliter le mouvement entre ces deux parties au moment du réglage des dimensions du cadre de détection 201.

Les éléments de blocage comprennent un picot 2011 et des orifices 2012. Le picot 2011 est adapté pour bloquer en position la glissière 201A par rapport à l'âme 201B. Afin de débloquer cette glissière 201A au moment du réglage de dimensions, le picot 2011 est adapté pour se rétracter dans l'âme 201B sous l'effet d'une pression verticale. Un système de ressort (non représenté) logé dans l'âme 201B permet au picot 2011 de reprendre une position dans un des orifices 2012 correspondant à la dimension souhaitée. On notera que les orifices 2012 s'étendent verticalement dans l'épaisseur de la glissière 201A.

Comme il a déjà été indiqué, le cadre de détection 201 comprend une pluralité de diodes électroluminescentes 2016. Ces diodes 2016 sont portées par un ruban 2017 recouvrant la glissière 201A. Le ruban 2017 comprend ainsi un ensemble de connexions électriques permettant l'alimentation des différentes diodes électroluminescentes 2016. De plus, le ruban 2017 est relié au module de transmission de données 203 via une connexion USB. On notera que les orifices 2012 des éléments de blocage traversent également l'épaisseur de ce ruban 2017.

Enfin, le cadre de détection sans contact 201 comprend des moyens de fixation 2013 de ce cadre 201 sur le châssis 100 de la borne interactive. Ces moyens de fixation 2012 sont représentés, dans l'exemple de réalisation de la figure 4, sous la forme d'une bande adhésive. En variante, ces moyens de fixation 2012 sont des rivets.

Les figures 5 et 6 illustrent le dispositif de projection d'un clavier numérique holographique 205 appartenant au kit de détection 20.

Ce dispositif de projection 205 comprend :
- un bâti 2051 ;
- une première cavité 2052;
- une seconde cavité 2053 ;
- une troisième cavité 2054.

Le bâti 2051 présente une forme globalement parallélépipédique. Ses dimensions mécaniques sont, par exemple, 150*150*80 mm. Ce bâti 2051 est adapté pour être logé dans la seconde partie 100B du châssis 100. La température de fonctionnement du dispositif de projection 205 est comprise entre -20°C et +60°C. On notera également que le dispositif de projection 205 est conforme aux normes de protection IP54 et IK07.

La première cavité 2052 est adaptée pour recevoir une dalle holographique. Cette dalle holographique est apte à générer un hologramme actif 20521 représentant un clavier numérique holographique. Préférentiellement, le clavier numérique holographique a une résolution de 480*272 et une dimension d'affichage de 4,3 pouces. La luminosité de l'hologramme actif est de 300 cd/m².

La seconde cavité 2053 est adaptée pour recevoir un capteur. Ce capteur est apte à détecter les interactions de l'utilisateur avec l'hologramme actif 20521 et à les transmettre au système d'exploitation de la borne interactive 10.

La troisième cavité 2054 est adaptée pour recevoir des cartes électroniques permettant l'affichage du clavier numérique holographique.

Préférentiellement, la puissance consommée du cadre de détection sans contact 201 est inférieure à 10W.

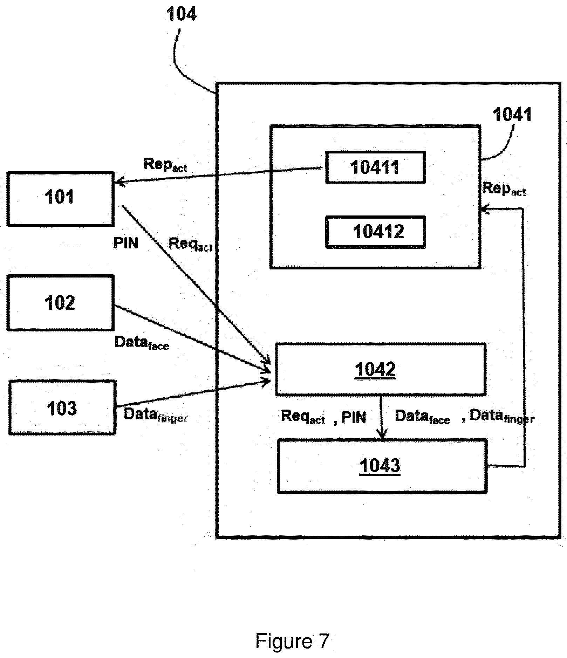

La figure 7 illustre le fonctionnement d'une architecture logicielle d'une borne interactive selon l'art antérieur. Dans cette figure 7, la borne interactive comprend une unité centrale 104. Cette unité centrale 104 est adaptée pour organiser les échanges de données entre l'écran tactile 101, la caméra 102 et le capteur d'empreinte 103. Plus particulièrement l'unité centrale 104 comprend :
- une plateforme logicielle 1041 ;
- un ensemble de pilotes informatiques 1042 ;
- un système d'exploitation 1043.

La plateforme logicielle 1041 regroupe une partie des logiciels utilisés par la borne interactive. Plus particulièrement, cette plateforme logicielle 1041 comprend une interface Homme-Machine 10411 et une sous-plateforme d'intergiciels (ou middlewares en anglais) 10412. L'interface Homme-Machine 10411 regroupe l'ensemble des logiciels servant à afficher les données de façon graphique sur l'écran tactile 101. La sous-plateforme d'intergiciels 10412 regroupe l'ensemble des logiciels aptes à créer un réseau d'informations entre différentes applications informatiques.

L'ensemble de pilotes informatiques 1042 comprend les différents pilotes informatiques qui vont permettre au système d'exploitation 1043 d'interagir avec les périphériques 101, 102, 103.

Le système d'exploitation 1043 est adapté pour réaliser différentes opérations telles que des opérations d'ordonnancement des processus, la gestion d'une mémoire principale, la gestion des entrées/sorties, la gestion des commandes utilisateurs, la protection de l'unité centrale 104, etc.

Pour la réalisation d'un service, par exemple, le traitement d'une demande d'activation d'une nouvelle carte d'identité, l'ensemble de l'unité centrale 104 est mis à contribution. Pour réaliser une telle demande d'activation, l'utilisateur se présente devant la borne interactive 10 muni de sa nouvelle carte d'identité préalablement reçue par la poste. Cet utilisateur agit sur l'écran tactile 101 et sélectionne le service d'activation de carte. Une requête d'activation Req_{act} est transmise à l'ensemble de pilotes informatiques 1042. Cette requête d'activation Req_{act} est ensuite acheminée vers le système d'exploitation 1043. Le système d'exploitation 1043 traite la requête et transmet une réponse Rep_{act} adaptée à la plateforme logicielle 1041. Cette plateforme logicielle 1041 envoie la réponse Rep_{act} à l'écran tactile 101 via l'interface Homme-Machine 10411. Au cours de la demande d'activation, la borne interactive peut demander à l'utilisateur un code secret PIN que celui-ci aura préalablement reçu, par exemple par téléphone. Ce code secret PIN est transmis par l'écran tactile 101 au système d'exploitation 1043 via l'ensemble de pilotes informatiques 1042. En outre, il peut être nécessaire de vérifier des données biométriques de l'utilisateur telles que des données associées au visage Data_{face} et/ou des données d'empreintes Data_{finger}. Ces données sont respectivement transmises au système d'exploitation 1043 par la caméra 102 et le capteur d'empreinte 103 via l'ensemble de pilotes informatiques 1042.

La figure 8 illustre le fonctionnement d'une architecture logicielle de la borne interactive 10 comprenant le kit de détection 20 de l'invention. Cette architecture logicielle se distingue de l'architecture logicielle de l'art antérieur représentée à la figure 7 en ce qu'elle comprend, en outre :
- une librairie intergiciels 2041 pour des périphériques sans contact ;
- un kit de développement logiciel 2042 pour le cadre de détection sans contact 201 ;
- un kit de développement logiciel 2043 pour le dispositif de projection 205 d'un clavier numérique holographique.

La librairie intergiciels 2041 est adaptée pour créer un réseau d'informations entre les différentes applications développées pour les périphériques sans contact 201, 205. Cette librairie intergiciels 2041 est stockée dans la sous-plateforme d'intergiciels 10412.

Le kit de développement logiciel 2042 permet de transmettre des réponses au cadre de détection sans contact 201.

Le kit de développement logiciel 2043 permet de transmettre des réponses au clavier numérique holographique 205.

Pour la réalisation d'un service, par exemple, le traitement d'une demande d'activation d'une nouvelle carte d'identité, l'ensemble de l'unité centrale 104 est mis à contribution. Pour réaliser une telle demande d'activation, l'utilisateur se présente muni de sa nouvelle carte d'identité préalablement reçue par la poste, devant la borne interactive 10 équipée du kit de détection 20. Cet utilisateur agit sur le cadre de détection sans contact 201 et sélectionne le service d'activation de carte. Une requête d'activation Req_{act} est transmise à l'ensemble de pilotes informatiques 1042. Cette requête d'activation Req_{act} est ensuite acheminée vers le système d'exploitation 1043. Le système d'exploitation 1043 traite la requête et transmet une réponse Rep_{act} adaptée à la plateforme logicielle 1041. La librairie intergiciels 2041 envoie la réponse Rep_{act} au cadre de détection sans contact 201 via le kit de développement logiciel 2042. Au cours de la demande d'activation, la borne interactive peut demander à l'utilisateur un code secret PIN que celui-ci aura préalablement reçu, par exemple par téléphone. Ce code secret PIN est transmis par le dispositif de projection 205 d'un clavier numérique holographique au système d'exploitation 1043 via l'ensemble de pilotes informatiques 1042. Ce dispositif de projection 205 est adapté pour interagir également avec le kit de développement logiciel 2043. En outre, il peut être nécessaire de vérifier des données biométriques telles que des données associées au visage Data_{face} et/ou des données d'empreintes Data_{finger}. Ces données sont respectivement transmises au système d'exploitation 1043 par la caméra 102 et le capteur d'empreinte 103.

Dans le mode de réalisation de la figure 8, le cadre de détection sans contact 201 se substitue totalement à l'écran tactile 101. En variante, l'écran tactile 101 peut rester actif pour de la présentation d'informations, la validation par l'utilisateur étant effectuée uniquement par le cadre de détection sans contact 201. Dans ce cas, la réponse Rep_{act} est scindée en deux sous-réponses coordonnées à destination du cadre de détection sans contact 201 et de l'écran tactile 101.

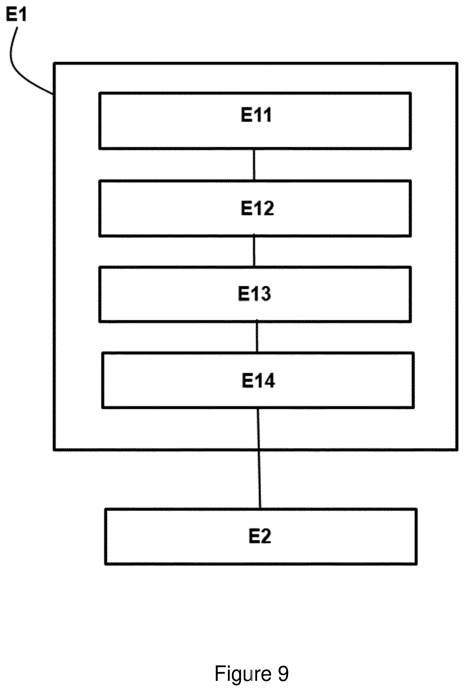

La figure 9 illustre les différentes étapes d'un procédé de transformation pour obtenir la borne interactive des figures 1 et 2 modifiée par le kit de détection 20.

Dans une première étape E1, on vient installer le kit de détection 20. Cette première étape comprend une pluralité de sous-étapes :
- une étape E11 de positionnement du cadre de détection sans contact 201 autour de l'écran tactile 101 ;
- une étape E12 de branchement du module d'alimentation électrique 202 à la borne interactive 10 ;
- une étape E13 de branchement du module de transmission de données à la borne interactive 10 ;
- une étape E14 de mise à jour logicielle de l'unité centrale 104 de la borne interactive 10 ;
- des étapes identiques peuvent être réalisées pour l'installation du dispositif de projection 205 d'un clavier numérique holographique.

Dans une étape E2, on vient calibrer les capteurs 2014, 2015 du cadre de détection sans contact 201. Cette opération de calibrage peut s'effectuer à l'aide d'un outil de recalibration adapté.

L'invention n'est pas limitée aux modes de réalisation et variantes présentées et d'autres modes de réalisation et variantes apparaîtront clairement à l'homme du métier.

Ainsi, pour favoriser le retour utilisateur suite à un clic, il est possible d'équiper le cadre de détection d'une technologie permettant de faire un retour haptique par ultrason.

Ainsi, il est possible de piloter une enceinte directionnelle qui émet des sons au moment du clic, soit dans le cadre de détection soit sur le dispositif de projection du clavier numérique holographique. L'enceinte peut être placée dans la partie basse de la borne interactive ou dans un plafond au-dessus de ladite borne interactive. Le lien avec le kit de détection est réalisé via un logiciel présent dans la borne interactive.

## Revendications

1. Kit de détection destiné à limiter des contacts physiques entre un utilisateur et un écran tactile (101) d'une borne interactive (10), ledit kit de détection (20) comprenant :
- un cadre de détection sans contact (201) apte à être positionné autour dudit écran tactile (101) ;
- un module d'alimentation électrique (202) apte à alimenter ledit cadre de détection (201) à partir de la borne interactive (10) ;
- un module de transmission de données (203) apte à permettre un échange de données entre le cadre de détection (201) et ladite borne interactive (10) ;
**caractérisé en ce que** :
- le cadre de détection sans contact (201) comprend au moins deux capteurs (2014, 2015), chaque capteur (2014, 2015) étant apte à détecter des mouvements de l'utilisateur au niveau d'un plan virtuel associé, lesdits plans virtuels associés aux au moins deux capteurs (2014, 2015) sont distants entre eux et parallèles à l'écran tactile (101) ;
- ledit kit de détection (20) comprend :
o une pluralité de diodes électroluminescentes (2016) s'étendant sur le cadre de détection sans contact (201), lesdites diodes électroluminescentes (2016) étant adaptées pour être activées en fonction des interactions de l'utilisateur avec au moins un desdits plans virtuels ;
o un module logiciel (204, 2042) agencé pour constituer une interface logicielle entre un système d'exploitation (1043) existant de la borne interactive (10) et les au moins deux capteurs et la pluralité de diodes électroluminescentes (2016) du cadre de détection ;
- ledit module logiciel (2042) est agencé pour :
o traduire une interaction de l'utilisateur :
▪ avec le plan virtuel le plus proche de l'écran tactile (101) en une commande de « clic/sélection » dudit utilisateur ;
▪ avec l'un des au moins deux autres plans virtuels en une commande dudit utilisateur de déplacement d'un pointeur ;
o provoquer des éclairages de la pluralité de diodes électroluminescentes (2016) distincts selon que les au moins deux capteurs (2014, 2015) aient détecté seuls ou en combinaison une interaction de l'utilisateur avec les plans virtuels qui leur sont respectivement associés.

2. Kit de détection selon la revendication 1 dans lequel le cadre de détection sans contact (201) comprend des moyens (201A, 201B, 2011, 2012) d'adaptation de la taille du cadre de détection (201) à l'écran tactile (101).

3. Kit de détection selon l'une quelconque des revendications 1 ou 2, dans lequel le cadre de détection sans contact (201) comprend des moyens de fixation (2013) dudit cadre (201) sur la borne interactive (10).

4. Kit de détection selon l'une quelconque des revendications 4 ou 5, dans lequel les deux capteurs (2014, 2015) sont sélectionnés parmi une liste de capteurs comprenant au moins :
- un capteur infrarouge ;
- un capteur à ultrasons ;
- une caméra de profondeur.

5. Kit de détection selon l'une quelconque des revendications 1 à 4, dans lequel ledit kit de détection (20) comprend un dispositif de projection (205) d'un clavier numérique holographique et un module logiciel (2043) agencé pour constituer une interface logicielle entre le système d'exploitation (1043) existant de la borne interactive (10) et le dispositif de projection (205) d'un clavier numérique holographique.

6. Kit de détection selon l'une quelconque des revendications 1 à 4, dans lequel ledit kit de détection (20) comprend un dispositif de projection holographique apte à remplacer l'écran tactile, et un module logiciel (2043) agencé pour constituer une interface logicielle entre le système d'exploitation (1043) existant de la borne interactive (10) et le dispositif de projection holographique apte à remplacer l'écran tactile.

7. Borne interactive destinée à être utilisée par un utilisateur, ladite borne interactive (10) comprenant un kit de détection (20) selon l'une quelconque des revendications 1 à 6.

8. Procédé de transformation d'une borne interactive (10) pour limiter des contacts entre un utilisateur et un écran tactile (101) de ladite borne interactive (10), ledit procédé comprenant :
- une étape d'installation d'un kit de détection (20) selon l'une quelconque des revendications 1 à 6 ;
- une étape de calibrage de capteurs (2014, 2015) dudit kit de détection (20).

## Patentansprüche

1. Erkennungskit, das dazu bestimmt ist, physische Kontakte zwischen einem Benutzer und einem Touchscreen (101) eines interaktiven Terminals (10) zu beschränken, das Erkennungskit (20) umfassend:
- einen kontaktlosen Erkennungsrahmen (201), der geeignet ist, um den Touchscreen (101) herum positioniert zu werden;
- ein Stromversorgungsmodul (202), das geeignet ist, den Erkennungsrahmen (201) von dem interaktiven Terminal (10) mit Strom zu versorgen;
- ein Datenübertragungsmodul (203), das geeignet ist, einen Datenaustausch zwischen dem Erkennungsrahmen (201) und dem interaktiven Terminal (10) zu ermöglichen;
**dadurch gekennzeichnet, dass:**
- der kontaktlose Erkennungsrahmen (201) mindestens zwei Sensoren (2014, 2015) umfasst, wobei jeder Sensor (2014, 2015) geeignet ist, Bewegungen des Benutzers auf einer zugehörigen virtuellen Ebene zu erkennen, wobei die den mindestens zwei Sensoren (2014, 2015) zugehörigen virtuellen Ebenen voneinander beabstandet und parallel zu dem Touchscreen (101) sind;
- das Erkennungskit (20) umfasst:
∘ eine Vielzahl von Leuchtdioden (2016), die sich über den kontaktlosen Erkennungsrahmen (201) erstrecken, wobei die Leuchtdioden (2016) zum Aktiviertwerden in Abhängigkeit von Interaktionen des Benutzers mit mindestens einer der virtuellen Ebenen angepasst sind;
∘ ein Softwaremodul (204, 2042), das zum Bilden einer Softwareschnittstelle zwischen einem vorhandenen Betriebssystem (1043) des interaktiven Terminals (10) und den mindestens zwei Sensoren und der Vielzahl von Leuchtdioden (2016) des Erkennungsrahmens angeordnet ist;
- das Softwaremodul (2042) angeordnet ist zum:
∘ Übersetzen einer Interaktion des Benutzers:
▪ mit der virtuellen Ebene, die dem Touchscreen (101) am nächsten ist, in einen Befehl zum "Klicken/Auswählen" des Benutzers;
▪ mit einer von mindestens zwei anderen virtuellen Ebenen, in einen Befehl des Benutzers zum Bewegen eines Zeigers;
∘ Veranlassen von unterschiedlichen Beleuchtungen der Vielzahl von Leuchtdioden (2016), je nachdem, ob die mindestens zwei Sensoren (2014, 2015) allein oder in Kombination eine Interaktion des Benutzers mit den ihnen jeweils zugehörigen virtuellen Ebenen erkannt haben.

2. Erkennungskit nach Anspruch 1, wobei der kontaktlose Erkennungsrahmen (201) Mittel (201A, 201B, 2011, 2012) zum Anpassen der Größe des Erkennungsrahmens (201) an den Touchscreen (101) umfasst.

3. Erkennungskit nach einem der Ansprüche 1 oder 2, wobei der kontaktlose Erkennungsrahmen (201) Mittel (2013) zum Befestigen des Rahmens (201) an dem interaktiven Terminal (10) umfasst.

4. Erkennungskit nach einem der Ansprüche 4 oder 5, wobei die zwei Sensoren (2014, 2015) aus einer Liste von Sensoren ausgewählt werden, umfassend mindestens:
- einen Infrarotsensor;
- einen Ultraschallsensor;
- eine Tiefenkamera.

5. Erkennungskit nach einem der Ansprüche 1 bis 4, wobei das Erkennungskit (20) eine Vorrichtung (205) zum Projizieren einer holografischen digitalen Tastatur und ein Softwaremodul (2043) umfasst, das zum Bilden einer Softwareschnittstelle zwischen dem vorhandenen Betriebssystem (1043) des interaktiven Terminals (10) und der Vorrichtung (205) zum Projizieren einer holografischen digitalen Tastatur angeordnet ist.

6. Erkennungskit nach einem der Ansprüche 1 bis 4, wobei das Erkennungskit (20) eine holografische Projektionsvorrichtung, die geeignet ist, den Touchscreen zu ersetzen, und ein Softwaremodul (2043) umfasst, das zum Bilden einer Softwareschnittstelle zwischen dem vorhandenen Betriebssystem (1043) des interaktiven Terminals (10) und der holografischen Projektionsvorrichtung angeordnet ist, die geeignet ist, um den Touchscreen zu ersetzen.

7. Interaktives Terminal, das geeignet ist, durch einen Benutzer genutzt zu werden, das interaktive Terminal (10) umfassend ein Erkennungskit (20) nach einem der Ansprüche 1 bis 6.

8. Verfahren zum Umwandeln eines interaktiven Terminals (10) zum Beschränken von Kontakten zwischen einem Benutzer und einem Touchscreen (101) des interaktiven Terminals (10), das Verfahren umfassend:
- einen Schritt zum Installieren eines Erkennungskits (20) nach einem der Ansprüche 1 bis 6;
- einen Schritt zum Kalibrieren von Sensoren (2014, 2015) des Erkennungskits (20).

## Claims

1. Detection kit for limiting physical contacts between a user and a touchscreen (101) of an interactive terminal (10), the detection kit (20) comprising:
- a non-contact detection frame (201) capable of being positioned around the touchscreen (101);
- an electric power supply module (202) capable of supplying power to the detection frame (201) from the interactive terminal (10);
- a data transmission module (203) capable of enabling data exchange between the detection frame (201) and the interactive terminal (10);
**characterized in that:**
- the non-contact detection frame (201) comprises at least two sensors (2014, 2015), each sensor (2014, 2015) being capable of detecting user movements at an associated virtual plane, the virtual planes associated with the at least two sensors (2014, 2015) are spaced apart and parallel to the touchscreen (101);
- the detection kit (20) comprises:
∘ a plurality of light-emitting diodes (2016) extending over the non-contact detection frame (201), the light-emitting diodes (2016) being suitable for being activated depending on the user's interactions with at least one of the virtual planes;
o a software module (204, 2042) arranged to form a software interface between an existing operating system (1043) of the interactive terminal (10) and the at least two sensors and the plurality of light-emitting diodes (2016) of the detection frame;
- the software module (2042) is arranged to:
o translate a user interaction:
▪ with the virtual plane closest to the touchscreen (101) in a "click/select" command from the user;
▪ with one of the at least two other virtual planes in a command from the user to move a pointer;
o cause the plurality of light-emitting diodes (2016) to illuminate separately depending on whether the at least two sensors (2014, 2015) have detected, alone or in combination, user interaction with the virtual planes respectively associated therewith.

2. Detection kit according to claim 1, wherein the non-contact detection frame (201) comprises means (201A, 201B, 2011, 2012) for adapting the size of the detection frame (201) to the touchscreen (101).

3. Detection kit according to any of claims 1 or 2, wherein the non-contact detection frame (201) comprises means (2013) for attaching the frame (201) to the interactive terminal (10).

4. Detection kit according to any of claims 4 or 5, wherein the two sensors (2014, 2015) are selected from a list of sensors comprising at least:
- an infrared sensor;
- an ultrasonic sensor;
- a depth camera.

5. Detection kit according to any of claims 1 to 4, wherein the detection kit (20) comprises a holographic keypad projection device (205) and a software module (2043) arranged to form a software interface between the existing operating system (1043) of the interactive terminal (10) and the holographic keypad projection device (205).

6. Detection kit according to any one of claims 1 to 4, wherein the detection kit (20) comprises a holographic projection device capable of replacing the touch screen, and a software module (2043) arranged to form a software interface between the existing operating system (1043) of the interactive terminal (10) and the holographic projection device capable of replacing the touchscreen.

7. Interactive terminal for use by a user, the interactive terminal (10) comprising a detection kit (20) according to any of claims 1 to 6.

8. Method for transforming an interactive terminal (10) to limit contacts between a user and a touchscreen (101) of the interactive terminal (10), the method comprising:
- a step of installing a detection kit (20) according to any of claims 1 to 6;
- a step of calibrating the sensors (2014, 2015) of the detection kit (20).
